(19) Europäisches Patentamt
European Patent Office
Office européen des brevets

(11) EP 2 628 224 B1

(12) # EUROPÄISCHE PATENTSCHRIFT

(45) Veröffentlichungstag und Bekanntmachung des Hinweises auf die Patenterteilung:
**16.07.2014 Patentblatt 2014/29**

(21) Anmeldenummer: **10770781.2**

(22) Anmeldetag: **14.10.2010**

(51) Int Cl.:
***H02J 3/00*** *(2006.01)* ***H02J 13/00*** *(2006.01)*

(86) Internationale Anmeldenummer:
**PCT/EP2010/065429**

(87) Internationale Veröffentlichungsnummer:
**WO 2012/048746 (19.04.2012 Gazette 2012/16)**

(54) **VERFAHREN UND EINRICHTUNG ZUM ERZEUGEN EINES ZUSTANDSSIGNALS**
METHOD AND APPARATUS FOR STATUS SIGNAL GENERATION
PROCÉDÉ ET DISPOSITIF POUR GÉNÉRER UN SIGNAL D'ÉTAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.08.2013 Patentblatt 2013/34**

(73) Patentinhaber: **Siemens Aktiengesellschaft
80333 München (DE)**

(72) Erfinder: **DZAFIC, Izudin
90459 Nürnberg (DE)**

(56) Entgegenhaltungen:
**EP-A1- 1 418 477 EP-A2- 1 729 223
WO-A2-03/025701**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein Verfahren zum Erzeugen eines Zustandssignals, das einen Zustand einer Energieübertragungsanlage anzeigt, wobei für vorgegebene Netzknoten der Energieübertragungsanlage elektrische Messwerte für zumindest eine elektrische Messgröße gemessen werden und unter Heranziehung der Messwerte das den Zustand anzeigende Zustandssignal erzeugt wird, wobei den an die Energieübertragungsanlage angeschlossenen elektrischen Lasten jeweils prognostizierte Lastdaten zugeordnet werden, die das elektrische Verhalten der jeweiligen Last prognostizieren. Das Zustandssignal kann als "Zustand" beispielsweise einen Strom-, Spannungs- oder Leistungswert an einem der Netzknoten der Energieübertragungsanlage, eine daraus abgeleitete Messgröße, eine Lastschätzung, einen Leistungsfluss oder eine beliebige andere Größe anzeigen, die sich auf die Energieübertragungsanlage mittelbar oder unmittelbar bezieht. Zum Beispiel kann als Zustandssignal ein Alarmsignal, das einen Alarmzustand anzeigt, oder ein Fehlersignal, das einen Fehler anzeigt, erzeugt werden.

Ein Verfahren der eingangs genannten Art ist z.B. aus der WO 03/025701 A2 bekannt.

Bei Hochspannungsnetzen werden üblicherweise an allen wichtigen Netzknoten Messsensoren angeordnet, um den jeweiligen Zustand des Hochspannungsnetzes jederzeit zuverlässig ermitteln und beispielsweise im Falle eines Fehlers geeignete Maßnahmen ergreifen zu können. Im Unterschied dazu fehlt es bei Mittelspannungsnetzen üblicherweise an der entsprechenden Anzahl an Messsensoren. In der Regel ist nicht jeder im Netz vorhandene Netzknoten mit entsprechenden Sensoren ausgestattet, so dass nicht bekannt ist, welche Spannungen und Phasenwinkel an diesen Netzknoten anliegen.

Der Erfindung liegt die Aufgabe zugrunde, ein Verfahren anzugeben, mit dem sich ein Zustandssignal auch dann schnell und zuverlässig erzeugen lässt, wenn mangels Messsensoren nicht ausreichend viele real gemessene Messwerte vorliegen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die elektrischen Lasten jeweils einer elektrischen Lastgruppe zugeordnet werden, in der elektrische Lasten mit vergleichbarer Prognosezuverlässigkeit zusammengefasst werden, jeder Lastgruppe jeweils ein individueller Wichtungswert zugewiesen wird, der die Prognosezuverlässigkeit der prognostizierten Lastdaten der der Lastgruppe zugeordneten Lasten beschreibt, und das Zustandssignal unter Heranziehung der Messwerte, der Lastdaten sowie der Wichtungswerte der Lastgruppen gebildet wird.

Ein wesentlicher Vorteil des erfindungsgemäßen Verfahrens besteht darin, dass sich dieses - beispielsweise mit einer elektronischen Datenverarbeitungsanlage - relativ schnell durchführen lässt. Erfindungsgemäß werden nämlich die bei dem Verfahren berücksichtigten Lasten gruppiert, und es werden Lastgruppen gebildet, deren Lasten jeweils eine vergleichbare Prognosezuverlässigkeit aufweisen. Eine Lastgruppe kann beispielsweise durch industrielle Lasten gebildet sein: Industrielle Lasten zeigen üblicherweise ein sehr verlässliches Lastverhalten, da dieses durch die betrieblichen Abläufe bestimmt wird. Eine andere Lastgruppe kann beispielsweise durch Normalkunden gebildet werden, deren Verbrauchsverhalten in aller Regel nicht so zuverlässig wie das der Industrie prognostiziert werden kann. Durch das Zusammenfassen der Lasten zu Lastgruppen und der Berücksichtigung lastgruppenindividueller Wichtungswerte lässt sich eine substanzielle Geschwindigkeitserhöhung gegenüber einer Verwendung von lastenindividuellen Wichtungswerten erreichen.

Vorzugsweise werden Lastgruppen für elektrische Lasten, für die jeweils mindestens ein Verbrauchsmesswert mindestens einer Energieverbrauchsmesseinrichtung vorliegt, sowie weitere Lastgruppen für elektrische Lasten, für die kein Verbrauchsmesswert vorliegt, zur Verfügung gestellt. Bei der Zuordnung der elektrischen Lasten zu einer der Lastgruppen wird bevorzugt neben der Prognosezuverlässigkeit auch das Vorliegen eines Verbrauchsmesswerts berücksichtigt.

Auch wird es als vorteilhaft angesehen, wenn zumindest ein aktueller Klimamesswert gemessen wird und die Wichtungswerte und/oder die Lastdaten unter Heranziehung des aktuell gemessenen Klimamesswerts korrigiert werden. Beispielsweise erfolgt eine Korrektur, wenn der aktuell gemessene Klimamesswert von einem vorgegebenen Klimasollwert abweicht.

Auch können für Netzknoten der Energieübertragungsanlage beispielsweise simulierte Messgrößenwerte errechnet werden, und es kann der Zustand der Energieübertragungsanlage unter Heranziehung der simulierten Messgrößenwerte überprüft werden. Beispielsweise können für Netzknoten, für die keine elektrischen Messwerte vorliegen, simulierte Messgrößenwerte errechnet werden. Mit anderen Worten kann im Rahmen des Verfahrens der Betrieb der Energieübertragungsanlage unter Heranziehung der elektrischen Messwerte, der prognostizierten Lastdaten und der Wichtungswerte auch "simuliert" werden.

Gemäß einer anderen Verfahrensvariante kann vorgesehen werden, dass für die vorgegebenen Netzknoten, für die elektrische Messwerte vorliegen, simulierte Messgrößenwerte errechnet werden, die simulierten Messgrößenwerte mit den gemessenen Messwerten verglichen werden, und optimierte Lastdaten gebildet werden, indem die prognostizierten Lastdaten variiert werden, bis die Abweichung zwischen den simulierten Messgrößenwerten und den elektrischen Messwerten minimal wird oder eine vorgegebene Schwelle erreicht oder unterschreitet.

Dabei können beim Variieren der Lastdaten die der jeweiligen Lastgruppe zugeordneten Wichtungswerte berücksichtigt werden, indem diejenigen Lastdaten, deren Wichtungswerte eine kleinere Prognosezuverlässigkeit anzeigen, in einem größeren Bereich variiert werden als Lastdaten, deren Wichtungswert eine größere Prognosezuverlässigkeit anzeigen.

Die Erfindung bezieht sich außerdem auf eine Einrichtung zum Erzeugen eines Zustandssignals, das den Zustand einer Energieübertragungsanlage anzeigt. Erfindungsgemäß ist die Einrichtung ausgestattet mit einer Schnittstelle zur Eingabe elektrischer Messwerte, die für vorgegebene Netzknoten der Energieübertragungsanlage für zumindest eine elektrische Messgröße gemessen werden, einer Steuereinrichtung, die geeignet ist, Lastgruppen zu bilden, den Lastgruppen Lasten zuzuordnen und den Lastgruppen jeweils einen individuellen Wichtungswert zuzuweisen, der die Prognosezuverlässigkeit prognostizierter Lastdaten der der Lastgruppe zugeordneten Lasten beschreibt, und den Zustand der Energieübertragungsanlage unter Heranziehung der Messwerte, der Lastdaten sowie der Wichtungswerte zu überprüfen und ein den Zustand anzeigendes Zustandssignal zu erzeugen.

Die Erfindung wird nachfolgend anhand von Ausführungsbeispielen näher erläutert; dabei zeigen beispielhaft:

Figur 1 ein Ausführungsbeispiel für eine Energieübertragungsanlage mit einer Vielzahl an Messabschnitten,

Figur 2 einen Abschnitt der Energieübertragungsanlage gemäß Figur 1 im Detail,

Figur 3 verschiedene Kombinationen für die komplexe Leistung, die aus Strom- und Spannungsmesswerten errechnet wird,

Figur 4 ein weiteres Ausführungsbeispiel für eine Energieübertragungsanlage mit einer Vielzahl an vorgegebenen Messabschnitten,

Figur 5 das Ausführungsbeispiel gemäß Figur 4 nach einer Neudefinition der Messabschnitte,

Figur 6 ein Flussdiagramm zur Erläuterung eines Ausführungsbeispiels des erfindungsgemäßen Verfahrens und

Figur 7 ein weiteres Ausführungsbeispiel für eine Anordnung zum Durchführen des erfindungsgemäßen Verfahrens.

In den Figuren werden der Übersicht halber für identische oder vergleichbare Elemente stets dieselben Bezugszeichen verwendet.

In Energieübertragungsanlagen von Mittelspannungsnetzen werden typischerweise radiale oder baumähnliche Einspeisesstrukturen eingesetzt, beispielsweise in Form von Schleifen, die als offene Ringe betrieben werden. In diesen Energieübertragungsanlagen stehen elektrische Messeinrichtungen nur an den Einspeisestellen zur Verfügung, in der Regel jedoch nicht an jedem Netzknoten der Energieübertragungsanlagen. Mit anderen Worten ist nur eine geringe Anzahl an Netzknoten der Energieübertragungsanlagen mit elektrischen Messeinrichtungen ausgestattet. Bei den elektrischen Messeinrichtungen handelt es sich beispielsweise um Strom- oder Spannungsmessgeräte oder um Leistungsmessgeräte, die die Wirkleistung und/oder die Blindleistung messen können. Informationen über die an die Energieübertragungsanlage angeschlossenen Lasten liegen daher in der Regel nicht in Form aktueller elektrischer Messwerte, sondern lediglich in Form von prognostizierten Lastdaten vor, die anhand von Erfahrungswerten gewonnen werden. Die prognostizierten Lastdaten können beispielsweise in Form von normalisierten Lastkurven für die Wirkleistung P und die Blindleistung Q oder in Form von normalisierten Lastkurven für die Wirkleistung P und den Leistungsfaktor $\cos(\varphi)$ vorliegen.

Die Figur 1 zeigt beispielhaft eine Energieübertragungsanlage, die als offener Ring betrieben wird. Die Energieübertragungsanlage ist mit mehreren elektrischen Messgeräten ausgestattet, durch die Messabschnitte MA1 bis MA8 definiert werden; dabei wird jeder Messabschnitt durch ein Messgerät begrenzt. In der Figur 1 sind Messgeräte durch Kreuze und Lasten durch nach unten gerichtete Pfeile markiert.

Da innerhalb der Messabschnitte keine Messgeräte vorhanden sind, müssen für darin befindliche Netzknoten Simulationen durchgeführt werden, wenn die an diesen Netzknoten anliegenden elektrischen Messgrößen quantitativ bestimmt werden sollen.

Für solche Simulationen wird vorzugsweise unter anderem berücksichtigt, dass die Messgrößen an den Schnittstellen aneinander angrenzender Messabschnitte wertmäßig zusammenpassen. Insbesondere sind Leistungsabweichungen an den Schnittstellen aneinander angrenzender Messabschnitte zu vermeiden. Letztere Bedingung ist schwer zu erfüllen, da üblicherweise an vielen Netzknoten nur Strommesseinrichtungen zur Verfügung stehen und somit nicht für jeden Netzknoten Informationen über die Wirkleistung und die Blindleistung vorliegen.

Figur 2 zeigt beispielhaft, wie benachbarte Messabschnitte über den Leistungsfluss miteinander gekoppelt sind: Der Leistungsfluss, der aus einem Messabschnitt heraus fließt, fließt in den anderen Messabschnitt hinein. Diese Tatsache kann für eine optimierte Schätzung des Lastverhaltens der angeschlossenen Lasten herangezogen werden. So kann die Verkopplung benachbarter Messabschnitte für eine iterative Berechnung herangezogen werden, bei der eine Lastflussberechnung für die gesamte Energieübertragungsanlage sowie eine Schätzung durchgeführt wird, mit der die Lastdaten angepasst werden und Leistungsunterschiede an den Schnittstellen zwischen benachbarten Messabschnitten vermieden werden.

Bei dem hier beispielhaft beschriebenen Schätzverfahren werden die Lastdaten und die elektrischen Messwerte sowie - falls vorhanden - Pseudomesswerte in der gleichen Weise behandelt. Die unterschiedliche Qualität dieser Informationen wird über unterschiedliche Wichtungswerte berücksichtigt. Beispielsweise wird durch eine hohe Gewichtung bzw. einen hohen Wichtungswert für reale bzw. tatsächlich gemessene Messwerte sichergestellt, dass diese bei der Simulation und Optimierung "getroffen" werden bzw. durch die Simulation und Optimierung nicht verändert werden. Durch eine niedrige Gewichtung bzw. niedrige Wichtungswerte für Pseudomesswerte und prognostizierte Lastdaten lässt sich sicherstellen, dass diese bei der Simulation und Optimierung in einem relativ großen Umfang verändert werden können und die Simulations- und/oder Optimierungsalgorithmen rechnerisch konvergieren können. Auch wird durch die Verwendung von Wichtungen und Wichtungswerten eine akkurate Behandlung nicht konformer Lasten möglich, indem diesen geringere Wichtungswerte als konformen Lasten zugewiesen werden.

Bei dem hier erläuterten Ausführungsbeispiel werden für eine Schätzung Lastdaten als Zustandsvariablen verwendet. Elektrische Spannungen und elektrische Ströme werden indirekt herangezogen, nachdem eine Leistungsflussberechnung durchgeführt worden ist. Die Schätzung benötigt weder die Strukturdaten der Messabschnitte noch deren Leitwerte. Die Schätzung benötigt lediglich die Summe der gemessenen Lasten in den verschiedenen Iterationsschritten, die Verluste und die Belastung an den Grenzen der Messabschnitte. In dieser Weise wird der Aufwand bei der Durchführung des Schätzverfahrens bei jedem Iterationsschritt deutlich reduziert.

Eine weitere erhebliche Reduktion des Rechenaufwands bei der Durchführung des Schätzverfahrens wird durch die Gruppierung der Lasten in Lastgruppen in jedem Messabschnitt erreicht. Eine Lastgruppe besteht aus bzw. umfasst Lasten, die dieselbe Informationsqualität (Prognosezuverlässigkeit) aufweisen und deren Lastverhalten sich mit vergleichbarer Zuverlässigkeit bzw. Genauigkeit prognostizieren lässt. Demgemäß werden Lasten derselben Lastengruppe bei der Schätzung und Simulation mit denselben Wichtungswerten berücksichtigt.

Für Messabschnitte, die einen kompletten Satz an Wirkleistungs (P)- und Blindleistungs (Q)-Messeinrichtungen aufweisen, ist der Schätzvorgang ziemlich einfach. Die Lasten werden in der Weise bestimmt, dass sie der Summe der eingespeisten und gemessenen Leistung an der jeweiligen Messabschnittsgrenze entsprechen. Nur die Verluste müssen in den nachfolgenden Iterationsprozessen berücksichtigt werden.

Schwieriger ist die Berechnung bei Messabschnitten, deren Messabschnittsgrenze nur mit einer Strommesseinrichtung ausgestattet ist. Strommesswerte können nämlich nicht direkt für die Bestimmung der Lastinformationen verwendet werden. In der Figur 3 ist gezeigt, dass eine Strommessung lediglich einen Ringbereich für die komplexe Leistung beschreibt. Es muss also eine Weiterverarbeitung der Strommesswerte erfolgen.

Die Weiterverarbeitung der Strommesswerte zu P- und Q-Pseudomesswerten wird beispielsweise für jeden Messabschnitt individuell ausgeführt. Für jeden Messabschnitt mit einem Strommesswert an der Messabschnittsgrenze kann man folgende Minimierung durchführen:

$$\sum_{i}^{NLG}\left( w_i^{P,LG}\left(P_i^{LG}\left(k_i^P-1\right)\right)^2 + w_i^{Q,LG}\left(Q_i^{LG}\left(k_i^Q-1\right)\right)^2\right) \rightarrow \min \qquad (1)$$

wobei die folgende Bedingung herangezogen wird:

$$\left(\sum_{i=1}^{NLG} k_i^P P_i^{LG} + \Delta P\right)^2 + \left(\sum_{i=1}^{NLG} k_i^Q Q_i^{LG} + \Delta Q\right)^2 - V^2 I_M{}^2 = 0 \qquad (2)$$

wobei bezeichnen:

*NLG* die Anzahl der Lastgruppen in dem jeweiligen Messabschnitt,

$P_i^{LG}$, $Q_i^{LG}$ die Wirk- und Blindleistung einer Lastgruppe (Lastbasisdaten), die aus einer Lastkurve bzw. aus Lastdaten oder aus Pseudomessungen gewonnen sind,

$w_i^{P,LG}$, $w_i^{Q,LG}$ den Wichtungsfaktor für P und Q der jeweiligen Lastgruppe,

$k_i^P$, $k_i^Q$ geschätzte Messwerte für P und Q der jeweiligen Lastgruppe,

$\Delta P$, $\Delta Q$ die Summe der Verluste in dem jeweiligen Messabschnitt, und zwar die gemessenen Verluste an der Messabschnittsgrenze und alle intern erzeugten Verluste,

$V$ die Spannung an der Messabschnittsgrenze, gewonnen aus der letzten internen Leistungsflusslösung und

$I_M$ den gemessenen Strom an der Messabschnittsgrenze.

Die bestimmten Werte $k_i^P P_i^{LG}$ und $k_i^Q Q_i^{LG}$ werden als neue Lastdaten für die nächste interne Leistungsflussberechnung und den nächsten Schätzschritt verwendet.

Die Umrechnung der Strommesswerte beginnt vorzugsweise mit den Messabschnitten, in denen nur ein Strommesswert umgerechnet werden muss.

Allgemein formuliert wird die Umrechnung vorzugsweise "von unten nach oben" durchgeführt, wobei mit dem Messabschnitt begonnen wird, der nur einen Strommesswert aufweist und noch nicht ungerechnet worden ist. Mit Blick auf die Einspeisestelle 2 in der Figur 1 wird also der Messabschnitt 6 nach den Messabschnitten 7 und 8 berücksichtigt, weil dieser zwei Netzknoten mit Strommesswerten aufweist. Zuerst werden also die Messabschnitte 7 und 8 umgerechnet. Diese Vorgehensweise reduziert die Anzahl an Strommesswerte, die in Messabschnitt 6 noch nicht umgerechnet worden sind. Schritt für Schritt wird die Anzahl an Strommesswerten reduziert, bis alle umgerechnet worden sind.

Im Falle von vermaschten Strukturen oder paralleler Einspeisung kann es unter Umständen passieren, dass sich nicht alle Strommesswerte an den Messabschnittsgrenzen eines Messabschnitts in der beschriebenen Weise umrechnen lassen. Die übrig bleibenden Strommesswerte können dann anders behandelt werden, wie weiter unten beispielhaft erläutert wird.

Die Umrechnung der Ströme zu P- und Q- Pseudomesswerten wird vorzugsweise individuell für jeden Messabschnitt durchgeführt, ohne eine Kopplung der Messabschnitte zu berücksichtigen. Kopplungen können in einem nachfolgenden Schätzschritt berücksichtigt werden, der das komplette Netzwerk erfasst.

Der nächste Schritt erzwingt vorzugsweise, dass der Fluss an den Messabschnittsgrenzen benachbarter Messabschnitte übereinstimmt.

Das Schätzproblem kann als eine Minimierung des Ziels J aufgefasst werden, das in der Gleichung (3) beschrieben ist. Der erste Teil der Gleichung (3) berücksichtigt, dass die Unterschiede zwischen den gemessenen Werten und den geschätzten Leistungsinformationen minimiert werden; der zweite Teil ist für die Minimierung der Unterschiede in den Lastinformationen zuständig. Der dritte und vierte Teil berücksichtigen die Unterschiede zwischen den gemessenen und den geschätzten Spannungen und Strömen. Zusätzlich müssen die folgenden Gleichheitsbedingungen erfüllt werden:

- Die Summe aus der geschätzten aktiven Wirkleistung für die realen Messwerte und die Pseudomesswerte und der Wirkleistung, die von realen Generatoren bereitgestellt wird, deckt die Wirkleistungsverluste (Gleichung (4)).
- Die Summe aus der geschätzten aktiven Blindleistung Q für die realen Messwerte und die Pseudomesswerte und der Blindleistung, die von realen Generatoren und Kapazitäten bereitgestellt wird, deckt die Blindleistungsverluste (Gleichung (5)).
- Für jeden Messabschnitt mit Pseudomesswerten, die aus Strommesswerten errechnet worden sind, müssen die geschätzten Werte $P_c^E$, $Q_c^E$, $I_c^E$ und $V_c$ die Gleichung (3) erfüllen.

$$J = \min \left( \sum_{i=1}^{NPQ} \left[ w_i^{PM} (P_i^E - P_i^m)^2 + w_i^{QM} (Q_i^E - Q_i^m)^2 \right] + \sum_{i=1}^{NLG} \left[ w_i^{PLG} \left( P_i^{LG} (k_i^P - 1) \right)^2 + w_i^{QLG} \left( Q_i^{LG} (k_i^Q - 1) \right)^2 \right] + \sum_{i=1}^{NI} w_i^{IM} (I_i^E - I_i^m)^2 + \sum_{i=1}^{NI} w_i^{VM} (V_i^E - V_i^m)^2 \right) \quad (3)$$

mit den Randbedingungen:

$$\sum_{i=1}^{NMK} P_i^E + \sum_{i=1}^{NGK} P_i^{Gen} - \sum_{i=1}^{NLGK} k_i^P P_i^{LG} - P_{loss}^k = 0 \quad (4)$$

$$\sum_{i=1}^{NMK} Q_i^E + \sum_{i=1}^{NGK} Q_i^{Gen} + \sum_{i=1}^{NCK} Q_i^{Cap} - \sum_{i=1}^{NLGK} k_i^Q Q_i^{LG} - Q_{loss}^k = 0 \quad (5)$$

$$\left( P_c^E \right)^2 + \left( Q_c^E \right)^2 - \left( V_c I_c^E \right)^2 = 0 \quad (6)$$

wobei bezeichnen

*NPQ* die Gesamtzahl der Leistungsmesswerte im System einschließlich solcher, die aus Strommesswerten errechnet worden sind,

*NLG* die Gesamtzahl der Lastgruppen,

*NLGK* die Zahl der Lastgruppen in dem Messabschnitt k,

*NI* die Gesamtzahl der Strommesswerte,

*NMK* die Zahl der P-/Q- Messpaare, die aus Strömen im Messabschnitt k errechnet worden sind,

*NGK* die Anzahl der Generatoren im Messabschnitt k,

*NCK* die Anzahl der Kapazitäten im Messabschnitt k,

$w_i^{PM}, w_i^{QM}, w_i^{IM}$ die Wichtungsfaktoren für die Wirkleistungs-, die Blindleistungs- und die Strommesswerte,

$P_i^E, Q_i^E$ geschätzte Wirkleistung und Blindleistung bezogen auf die i-te Messung,

$I_i^E$ geschätzter Strom bezogen auf die i-te Messung,

$I_i^m$ gemessene i-te Stromhöhe,

$P_i^m, Q_i^m$ gemessene Wirkleistung und Blindleistung einschließlich Pseudomesswerten, die aus Strömen abgeleitet sind,

$w_i^{P,LG}, w_i^{Q,LG}$ Wichtungswerte für die Wirkleistung und die Blindleistung für die i-te Lastgruppe,

$k_i^P, k_i^Q$ geschätzte Skalierfaktoren für die Leistung in der i-ten Lastgruppe,

$P_i^{LG}, Q_i^{LG}$ Wirkleistung und Blindleistung in der i-ten Lastgruppe,

$P_i^{Gen}, Q_i^{Gen}$ die Wirkleistung und die Blindleistung des i-ten Generators,

$V_i^E$ die geschätzte Spannung bezogen auf die i-te Messung,

$V_i^m$ gemessene i-te Spannung,

$V_c$ Spannung, die für die Leistungsumrechnung verwendet wird,

$P_{loss}^k, Q_{loss}^k$ Leistungsverlust in dem Messabschnitt k und

$P_c^E, Q_c^E, I_c^E$ Schätzergebnisse für einen Strom, der zu einer Leistung umgerechnet wurde.

Vorzugsweise wird für die Umrechnung der Ströme in Leistung und die Schätzung für das komplette System folgender Ansatz gewählt:

$$(7) \quad J(\boldsymbol{x}) = \left(\boldsymbol{x} - \boldsymbol{x}^M\right)^T \boldsymbol{W} \left(\boldsymbol{x} - \boldsymbol{x}^M\right) \rightarrow \min$$

wobei bezeichnen:

$x^M$ den Vektor der Messinformationen (real und pseudo),
$x$ den Vektor der geschätzten Zustandsvariablen und
$W$ die Diagonalmatrix der Wichtungsfaktoren

Die Schätzung berücksichtigt vorzugsweise alle vorhandenen Randbedingungen

$$(8) \quad \boldsymbol{g}_i(\boldsymbol{x}) = 0 \ ,$$

die durch die Gleichung (2) für die Umrechnung der Ströme und durch die Gleichungen (4), (5) und (6) für die Schätzung des gesamten Systems festgelegt sind. Das Optimierungsproblem mit Gleichheitsrandbedingungen kann gelöst werden unter Verwendung von Lagrange Multiplikatoren mit einer Lagrange Funktion, wie sie durch folgende Gleichung beschrieben wird:

$$(9) \quad L(\boldsymbol{x},\boldsymbol{\lambda}) = J(\boldsymbol{x}) - \sum_i^m \lambda_i g_i(\boldsymbol{x}) = J(\boldsymbol{x}) - \boldsymbol{\lambda}^T \boldsymbol{g}(\boldsymbol{x})$$

mit

$\lambda$ als Vektor der Lagrange Multiplikatoren.

Bei der Lösung müssen die folgenden Gleichungen erfüllt werden:

$$(10) \quad \nabla L(\boldsymbol{x},\boldsymbol{\lambda}) = \boldsymbol{0}$$

$$(11) \quad \frac{\partial L}{\partial \boldsymbol{x}} = 0 \quad \Rightarrow \quad \boldsymbol{W}\left(\boldsymbol{x}_i^M - \boldsymbol{x}_i\right) + \boldsymbol{G}^T \boldsymbol{\lambda} = \boldsymbol{0}$$

$$\frac{\partial L}{\partial \lambda} = 0 \quad \Rightarrow \quad \boldsymbol{g}(\boldsymbol{x}) = \boldsymbol{0} \qquad (12)$$

Der Satz dieser nicht-linearen Gleichungen wird vorzugsweise iterativ unter Verwendung der Newton-Raphson-Methode gelöst:

$$\begin{bmatrix} \boldsymbol{W} & \boldsymbol{G}^T \\ \boldsymbol{G} & \boldsymbol{0} \end{bmatrix} \begin{bmatrix} \Delta \boldsymbol{x} \\ -\boldsymbol{\lambda} \end{bmatrix} = \begin{bmatrix} \boldsymbol{W} \, \Delta \hat{\boldsymbol{x}}^k \\ -\boldsymbol{g}(\boldsymbol{x}^k) \end{bmatrix} \qquad (13)$$

wobei bezeichnen:

$\boldsymbol{x}^k$ die Lösung der k-ten Iteration,

$\boldsymbol{x}^M$ den Vektor der Messungen einschließlich der Pseudomessungen,

$\Delta x = x^{k+l} - x^k$ den Vektor mit den Differenzen zwischen den Ergebnissen zweier aufeinanderfolgender Iterationsschritte,

$\Delta \hat{\boldsymbol{x}}^k = \boldsymbol{x}^M - \boldsymbol{x}^k$ den Vektor mit den Differenzen zwischen den Messungen und den Ergebnissen der k-ten Iteration,

$\boldsymbol{G} = \frac{\partial \boldsymbol{g}(\boldsymbol{x})}{\partial \boldsymbol{x}}$ die Matrix mit den partiellen Ableitungen des Bedingungsvektors und

$\lambda$ den Vektor der Lagrange Multiplikatoren.

Wenn an einer Messabschnittsgrenze zwei oder mehr Strommesswerte vorliegen, kann die Umrechnung der Strommesswerte in Pseudoleistungsflussinformationen beispielsweise derart durchgeführt werden, dass zunächst alle Strommesswerte konvertiert werden, die zu einem anderen Messabschnitt mit nur einem noch nicht konvertierten Strommesswert führen. In dieser Weise wird die Anzahl der noch nicht konvertierten Messströme immer weiter reduziert. Diese Vorgehensweise ist bei radialen und baumstrukturähnlichen Netzwerken stets einsetzbar.

Für Netzwerke mit vermaschter Struktur oder paralleler Einspeisung führt diese Vorgehensweise jedoch nicht immer zum Ziel. Die Figur 4 zeigt beispielhaft eine vermaschte Topologie. In der Figur 4 sind die Messabschnitte mit dem Bezugszeichen MA, Generatoren durch ein G, Kapazitäten durch ein C, Lastgruppen durch einen nach unten gerichteten Pfeil und Messpunkte durch dicke schwarze Punkte gekennzeichnet.

Die Ströme I0 und I1 (verschleifte Einspeisung) sowie I2 und I3 (parallele Einspeisung) werden bei dieser Anordnung bevorzugt anders als oben beschrieben konvertiert. Beispielsweise werden die Impedanzen innerhalb der Schleife oder die Verkopplung der Abzweige direkt bei der Schätzung berücksichtigt. Jeder Abzweig eines Abschnitts mit mehreren verbliebenen Strominformationen kann als eigener Messabschnitt definiert werden, der definierte Wirk- und Blindleistungsmesswerte an jedem seiner Enden aufweist. Diese Messwerte können virtuell genannt werden, da sie nicht von realen Strommesswerten abgeleitet worden sind.

Für einen Abzweig vom Netzknoten i bis j lässt sich die komplexe Leistung an den beiden Seiten bestimmen gemäß:

$$\begin{bmatrix} \underline{S}_{ij} \\ \underline{S}_{ji} \end{bmatrix} = \begin{bmatrix} \underline{V}_i & 0 \\ 0 & \underline{V}_j \end{bmatrix} \begin{bmatrix} \underline{I}_i \\ \underline{I}_j \end{bmatrix}^* = \begin{bmatrix} \underline{V}_i & 0 \\ 0 & \underline{V}_j \end{bmatrix} \left( \begin{bmatrix} \underline{Y}_{ii} & \underline{Y}_{ij} \\ \underline{Y}_{ji} & \underline{Y}_{jj} \end{bmatrix} \begin{bmatrix} \underline{V}_i \\ \underline{V}_j \end{bmatrix} \right)^*$$

wobei bezeichnen:

$\underline{V}_i, \underline{V}_j$ die komplexe Spannung am Knoten i und am Knoten j,

$\underline{S}_{nm}$ die komplexe Leistung von Knoten n zum Knoten m mit $n,m \in [i,j]$ und

$\underline{Y}_{nm}$ die Parameter des Zweigs mit $n,m \in [i,j]$,

Die Leistungsinformation wird aus der vorhergehenden Lastflussberechnung extrahiert und als Messwert mit geringem Wichtungswert (Wichtungsfaktor) weiter verwendet.

Die Berechnung der virtuellen Leistungsmesswerte wird vorzugsweise nur für die Seiten der Abzweige durchgeführt, die mit einem Knoten im Inneren des vermaschten Netzes verbunden sind. Keine Berechnung wird durchgeführt, wenn für die Zweigseiten reale Leistungsmesswerte zur Verfügung stehen.

Die Figur 5 zeigt das Netzwerk gemäß der Figur 4 mit den neu gebildeten Messabschnitten und den entsprechenden virtuellen Messwerten. Die neu gebildeten Messabschnitte, die keine Abzweige enthalten, können auch virtuelle Knotenbereiche genannt werden. In der Figur 5 sind die ursprünglichen Messabschnitte mit dem Bezugszeichen MA, die neu gebildeten Messabschnitte mit dem Bezugszeichen NMA, Generatoren durch ein G, Kapazitäten durch ein C, Lastgruppen durch einen nach unten gerichteten Pfeil, reale Messpunkte durch einen dicken schwarzen Punkt, virtuelle P- und Q-Messstellen durch ein Kreuz und Messtellen, für die gemessene Stromwerte in virtuelle P- und Q-Werte umgerechnet werden, durch einen durchgestrichenen Punkt gekennzeichnet.

Das Ziel in Gleichungen (3) bis (6), das für den Optimierungsprozess verwendet wird, kann mit der zusätzlichen virtuellen Information ergänzt werden gemäß

$$J' = \min \Bigg( J + \sum_{i=1}^{NVNA} \left( w_{Vi}^{NVNA} \left( V_i^{E,VN} - V_i^{c,VN} \right) \right) + \sum_{i=1}^{NVNA} \left( w_{\varphi i}^{NVNA} \left( \varphi_i^{E,VN} - \varphi_i^{c,VN} \right) \right) \Bigg)$$

wobei bezeichnen:

$J$ das Ziel gemäß Gleichungen (3) bis (6),

$J'$ das erweiterte Ziel,

$NVNA$ die Anzahl an virtuellen Knotenbereichen,

$V_i^{E,VN}$, $\theta_i^{E,VN}$ die Spannung und den Phasenwinkel im virtuellen Knotenbereich geschätzt mit einem WLS-Algorithmus und

$V_i^{c,VN}$, $\theta_i^{c,VN}$ die Spannung und den Phasenwinkel im virtuellen Knotenbereich berechnet gemäß Leistungsfluss.

Die virtuellen Knotenbereiche müssen das erste Kirchhoffsche Gesetz erfüllen:

$$\sum_{i=1}^{NLDk} P_i^{Ek} + \sum_{i=1}^{NBRk} P_i^{E,Brk} = 0$$

$$\sum_{i=1}^{NLDk} Q_i^{Ek} + \sum_{i=1}^{NBRk} Q_i^{E,Brk} = 0$$

wobei bezeichnen:

$NLDk$ die Anzahl der Lasten, die mit dem virtuellen Knotenbereich k verknüpft sind,

$NBRk$ die Anzahl der Abzweige, die mit dem virtuellen Knotenbereich k verknüpft sind,

$P_i^{Ek}, Q_i^{Ek}$ die geschätzte Last i, die mit dem virtuellen Knotenbereich k verknüpft ist, und

$P_i^{E,Brk}, Q_i^{E,Brk}$ den geschätzten Fluss durch Abzweig i, der mit dem virtuellen Knotenbereich k verknüpft ist.

Die zusätzlichen Randbedingungen sind im Übrigen in den Gleichungen (4) und (5) berücksichtigt. Die virtuellen Leistungsmessungen können somit während der Schätzung in der gleichen Weise berücksichtigt werden wie die realen Leistungsmessungen, es muss nur eine geringere Wichtung berücksichtigt werden. Die virtuellen Leistungsmessungen lassen sich durch die Lastflussberechnung bestimmen, die der Schätzung vorausgehen kann.

In der Figur 6 ist ein Flussdiagramm für ein Ausführungsbeispiel eines Schätzvorgangs dargestellt. In Schritt 100 wird der Prozess gestartet. In Schritt 101 werden die Messabschnitte gebildet. In Schritt 102 werden Strommesswerte in P- und Q-Werte "von unten nach oben" umgewandelt. In Schritt 103 werden die Lasten geschätzt. In Schritt 104 erfolgt die Berechnung des Leistungsflusses. In Schritt 105 wird geprüft, ob es sich um den ersten Iterationsschritt handelt. Ist dies der Fall, wird zu Schritt 106 und andernfalls zu Schritt 107 übergangen.

In Schritt 106 wird geprüft, ob es sich um ein vermaschtes Netz oder ein Netz mit paralleler Einspeisung handelt. Ist dies der Fall, werden in Schritt 108 die Messabschnitte verändert und es wird mit Schritt 102 fortgefahren. Andernfalls wird zu Schritt 107 übergegangen.

In Schritt 107 wird die in der Figur 6 beschriebene Abfrage durchgeführt: Es wird geprüft, ob die Differenz der ermittelten Verlustleistung $P_{loss}$ bei aufeinander folgenden Iterationsschritten geringer ist als ein vorgegebener Schwellenwert $\varepsilon_{loss}$ und ob die Differenz der ermittelten Spannung $V_{max}$ bei aufeinander folgenden Iterationsschritten geringer ist als ein vorgegebener Schwellenwert $\varepsilon_V$. Sind beide Bedingungen erfüllt, wird das Verfahren beendet (Schritt 109). Andernfalls wird weiter optimiert durch Rücksprung auf Schritt 102.

In der Figur 7 ist ein Blockschaltbild einer Anordnung 200 gezeigt, mit der ein Zustandssignal erzeugt werden kann, das den Zustand einer Energieübertragungsanlage anzeigt.

Die Anordnung 200 umfasst einen Speicher SP, in dem Lastdaten Li(t=0) abgespeichert sind. Die Lastdaten Li beschreiben die betreiberseitig abgenommene Wirk- und/oder Blindleistung P bzw. Q für die i-te Last, die an die Energieübertragungsanlage angeschlossen ist.

Mit dem Speicher SP ist eine Vorverarbeitungseinrichtung STLS verbunden, die die Lastdaten Li(t=0) aus dem Speicher SP auslesen und verarbeiten kann. Sofern seitens einer Schätzeinrichtung DSSE noch keine Eingabewerte vorliegen, wird die Vorverarbeitungseinrichtung die Lastdaten Li(t=0) an eine nachgeordnete Korrektureinrichtung STLF weiterleiten. Liegen hingegen von der Schätzeinrichtung DSSE geschätzte Lastdaten LiDSSE vor, so kann die Vorverarbeitungseinrichtung STLS entscheiden, ob sie diese oder die Lastdaten Li(t=0) weiterleitet. Hierzu kann die Vorverarbeitungseinrichtung STLS beispielsweise prüfen, ob die Prognosezuverlässigkeit, die in Form eines Wichtungswerts oder Wichtungsfaktors wLiDSSE definiert wird, eine vorgegebene Schwelle überschreitet oder nicht. Überschreitet der Wichtungsfaktor wLiDSSE die Schwelle, wird die Vorverarbeitungseinrichtung STLS vorzugsweise die geschätzten Lastdaten LiDSSE an die nachgeordnete Korrektureinrichtung STLF weiterleiten und andernfalls die Lastdaten Li(t=0). Die von der Vorverarbeitungseinrichtung STLS weitergeleiteten Lastdaten sind in der Figur 7 mit dem Bezugszeichen LiSTLS gekennzeichnet.

Die Vorverarbeitungseinrichtung STLS leitet außerdem Wichtungswerte oder Wichtungsfaktoren wLiSTLS weiter, die die Prognosezuverlässigkeit der weitergeleiteten Lastdaten LiSTLS kennzeichnen.

Die nachgeordnete Korrektureinrichtung STLF prüft, ob die den weitergeleiteten Lastdaten LiSTLS zugrunde liegenden klimatischen Annahmen zutreffend sind. Hierzu vergleicht sie aktuell gemessene Klimawerte K(t) (z. B. Temperatur-, Feuchtigkeits- und/oder Windstärkewerte) mit den Klimawerten, die den weitergeleiteten Lastdaten LiSTLS zugrunde liegen und bildet klimakorrigierte Lastdaten LiSTLF. Beispielsweise wendet die Korrektureinrichtung STLF eine Korrekturfunktion f an gemäß:

$$LiSTLF = f(LiSTLS, T(t), T_STLS, W(t), W_STLS, H(t), H_STLS)$$

wobei bezeichnen:

| | |
|---|---|
| f | die Klimakorrekturfunktion |
| T(t) | die aktuell gemessene Temperatur |
| T_STLS | die den Lastdaten LiSTLS zugrunde liegende Temperatur |
| H(t) | die aktuell gemessene Feuchtigkeit |
| T_STLS | die den Lastdaten LiSTLS zugrunde liegende Feuchtigkeit |
| T(t) | die aktuell gemessene Windstärke und |
| T_STLS | die den Lastdaten LiSTLS zugrunde liegende Windstärke |

Die Korrekturfunktion f kann beispielsweise eine Produktbildung mit einem klimaabhängigen Korrekturfaktor fSTLS vorsehen gemäß

$$LiSTLF = LiSTLS * fSTLS(K(t))$$

Um durch die Klimakorrektur ein Schwingen zu vermeiden, kann die Klimakorrektur darüber hinaus eine numerische Glättung vorsehen, indem die Klimawerte über eine vorgegebene Zeitspanne vor dem jeweiligen Messzeitpunkt gemittelt werden.

Falls zum Zeitpunkt der Klimakorrektur kein aktueller Klimawert, sondern beispielsweise nur ein Klimawert von dem vorherigen Iterationsschritt zur Verfügung steht, so kann dieser dennoch für eine Korrektur verwendet werden. Vorzugsweise wird das jeweilige Alter der Klimawerte durch einen exponentiell abklinkenden Zeitfaktor ZF berücksichtigt, der bei hohem Alter der Klimawerte gegen Null konvergiert. Der Zeitfaktor ZF kann beispielsweise die Form aufweisen:

$$ZF(t) = \exp((t-t')/t_ref),$$

wobei t den aktuellen Zeitpunkt, t' den Zeitpunkt der Aufnahme des Klimawerts und t_ref eine vorgegebene Abklingkonstante bezeichnet.

Die Korrekturfunktion f kann mit einem solchem Zeitfaktor beispielsweise lauten

$$LiSTLF = LiSTLS * fSTLS(K(t)) * ZF(t)$$

Die Korrektureinrichtung STLF gibt die klimakorrigierten Lastdaten LiSTLF an eine Nachverarbeitungseinrichtung PP weiter, an die Energieverbrauchsmesseinrichtungen AMI und AMR angeschlossen sind. Die Energieverbrauchsmesseinrichtungen AMI und AMR messen an vorgegebenen Netzknoten Verbrauchsmesswerte E(t) und leiten diese an die Nachverarbeitungseinrichtung PP weiter. Die Nachverarbeitungseinrichtung PP vergleicht die Verbrauchsmesswerte E(t) mit den klimakorrigierten Lastdaten LiSTLF und führt eine Korrektur durch, wenn die klimakorrigierten Lastdaten LiSTLF von den Verbrauchsmesswerten E(t) abweichen. Beispielsweise wendet die Nachverarbeitungseinrichtung PP auf die klimakorrigierten Lastdaten LiSTLF und die Wichtungsfaktoren wLiSTLS eine Korrekturfunktion q1 bzw. q2 an gemäß

LiPP = q1(LiSTLF, E(t))
wLIPP = q2(wLiSTLS, E(t))

wobei bezeichnen:

| | |
|---|---|
| q1 | die Korrekturfunktion für die Lastdaten |
| q2 | die Korrekturfunktion für die Wichtungsfaktoren |
| LiPP | die korrigierten Lastdaten der Nachverarbeitungseinrichtung und |
| wLIPP | die korrigierten Wichtungswerte der Nachverarbeitungseinrichtung. |

Nachdem die korrigierten Lastdaten LiPP und die korrigierten Wichtungswerten wLIPP gebildet worden sind, ordnet die Nachverarbeitungseinrichtung PP die Lasten mit den korrigierten Lastdaten LiPP jeweils einer elektrischen Lastgruppe zu, in der elektrische Lasten mit vergleichbarer Prognosezuverlässigkeit zusammengefasst werden. Hierzu kann die Nachverarbeitungseinrichtung PP beispielsweise die korrigierten Wichtungswerte wLIPP heranziehen und alle Lasten mit ähnlichen Wichtungswerten wLIPP jeweils derselben Lastgruppe zuordnen.

Üblicherweise werden industrielle Lasten (z. B. Fabriken etc.) eine größere Prognosezuverlässigkeit aufweisen als private Lasten (Privathaushalte), so dass für industrielle Lasten und für private Lasten jeweils mindestens eine Lastgruppe gebildet wird.

Die korrigierten Lastdaten LiPP werden anschließend als "prognostizierte Lastdaten" gemeinsam mit den Wichtungswerten wGruppe der Lastgruppen in die Schätzeinrichtung DSSE eingespeist.

Die Schätzeinrichtung DSSE verarbeitet neben den Lastdaten LiPP und den Wichtungswerten wGruppe der Lastgruppen real gemessene elektrische Messwerte, beispielsweise aktuell gemessene Stromwerte I, Spannungswerte U, Wirkleistungswerte P und/oder Blindleistungswerte Q.

Die Schätzeinrichtung DSSE führt unter Heranziehung der eingangsseitig anliegenden Daten eine Schätzung der Lasten und eine Schätzung des Leistungsflusses durch, wie dies im Zusammenhang mit den Figuren 1 bis 6 eingehend beschrieben worden ist. Dabei berücksichtigt sie neben den prognostizierten Lastdaten LiPP insbesondere die Wichtungswerte wGruppe der jeweiligen Lastgruppe.

Im Rahmen der Schätzung werden neue geschätzte Lastdaten LiDSSE und neue geschätzte Wichtungswerte wDSSE gebildet, die zu der Vorverarbeitungseinrichtung STLS übertragen werden, damit im Rahmen des Iterationsverfahrens ein neuer Iterationsschritt beginnen kann.

Die Schätzeinrichtung DSSE erzeugt im Rahmen der Schätzung oder separat ein Zustandssignal Sz, das mindestens einen Zustand der Energieübertragungsanlage anzeigt. Das Zustandssignal kann als "Zustand" beispielsweise einen Strom-, Spannungs- oder Leistungswert an einem der Netzknoten der Energieübertragungsanlage, eine daraus abgeleitetet Messgröße, einen Leistungsfluss und/oder eine Lastschätzung anzeigen. Auch kann als Zustandssignal ein Alarmsignal, das einen Alarmzustand anzeigt, oder ein Fehlersignal, das einen Fehler anzeigt, erzeugt werden.

Das Zustandssignal Sz kann beispielsweise von nachgeordneten Einrichtungen VVC und SCADA weiterverarbeitet werden.

In der Figur 7 bilden die Vorverarbeitungseinrichtung STLS, der Speicher SP, die Korrektureinrichtung STLF und die Schätzeinrichtung DSSE gemeinsam eine Steuereinrichtung 210, die geeignet ist, Lastgruppen zu bilden, den Lastgruppen Lasten zuzuordnen und den Lastgruppen jeweils einen individuellen Wichtungswert zuzuweisen, der die Prognosezuverlässigkeit prognostizierter Lastdaten der der Lastgruppe zugeordneten Lasten beschreibt, und den Zustand der Energieübertragungsanlage unter Heranziehung der Messwerte, der Lastdaten sowie der Wichtungswerte zu überprüfen und ein den Zustand anzeigendes Zustandssignal zu erzeugen.

Die Schnittstelle 220 dient zur Eingabe elektrischer Messwerte, die für vorgegebene Netzknoten der Energieübertragungsanlage für zumindest eine elektrische Messgröße gemessen werden.

## Patentansprüche

**1.** Verfahren zum Erzeugen eines Zustandssignals (Sz), das einen Zustand einer Energieübertragungsanlage anzeigt, wobei

- für vorgegebene Netzknoten der Energieübertragungsanlage elektrische Messwerte für zumindest eine elektrische Messgröße gemessen werden und
- unter Heranziehung der Messwerte das den Zustand anzeigende Zustandssignal (Sz) erzeugt wird, wobei
- den an die Energieübertragungsanlage angeschlossenen elektrischen Lasten jeweils prognostizierte Lastdaten zugeordnet werden, die das elektrische Verhalten der jeweiligen Last prognostizieren,

**dadurch gekennzeichnet, dass**

- die elektrischen Lasten jeweils einer elektrischen Lastgruppe zugeordnet werden, in der elektrische Lasten mit vergleichbarer Prognosezuverlässigkeit zusammengefasst werden,
- jeder Lastgruppe jeweils ein individueller Wichtungswert zugewiesen wird, der die Prognosezuverlässigkeit der prognostizierten Lastdaten der der Lastgruppe zugeordneten Lasten beschreibt, und
- das Zustandssignal (Sz) unter Heranziehung der Messwerte, der Lastdaten sowie der Wichtungswerte gebildet wird.

**2.** Verfahren nach Anspruch 1,
**dadurch gekennzeichnet, dass**

- Lastgruppen für elektrische Lasten, für die jeweils zumindest ein Verbrauchsmesswert zumindest einer Energieverbrauchsmesseinrichtung vorliegt, sowie weitere Lastgruppen für elektrische Lasten, für die kein Verbrauchsmesswert vorliegt, zur Verfügung stehen und
- bei der Zuordnung der elektrischen Lasten zu einer der Lastgruppen die Prognosezuverlässigkeit sowie das Vorhandensein eines Verbrauchsmesswerts berücksichtigt wird.

**3.** Verfahren nach einem der voranstehenden Ansprüche,
**dadurch gekennzeichnet, dass**
zumindest ein aktueller Klimamesswert gemessen wird und die Wichtungswerte und/oder die Lastdaten unter Heranziehung des aktuell gemessenen Klimamesswerts korrigiert werden.

**4.** Verfahren nach Anspruch 3,
**dadurch gekennzeichnet, dass**
eine Korrektur erfolgt, wenn der aktuell gemessene Klimamesswert von einem vorgegebenen Klimasollwert abweicht.

**5.** Verfahren nach einem der voranstehenden Ansprüche,
**dadurch gekennzeichnet, dass**

- unter Heranziehung der elektrischen Messwerte, der prognostizierten Lastdaten und der Wichtungswerte für Netzknoten der Energieübertragungsanlage simulierte Messgrößenwerte errechnet werden und

- der Zustand der Energieübertragungsanlage unter Heranziehung der simulierten Messgrößenwerte überprüft wird.

**6.** Verfahren nach Anspruch 5,
**dadurch gekennzeichnet, dass**
für Netzknoten, für die keine elektrischen Messwerte vorliegen, simulierte Messgrößenwerte errechnet werden.

**7.** Verfahren nach einem der voranstehenden Ansprüche,
**dadurch gekennzeichnet, dass**

- für die vorgegebenen Netzknoten, für die elektrische Messwerte vorliegen, simulierte Messgrößenwerte errechnet werden,
- die simulierten Messgrößenwerte mit den gemessenen Messwerten verglichen werden und
- optimierte Lastdaten gebildet werden, indem die prognostizierten Lastdaten variiert werden, bis die Abweichung zwischen den simulierten Messgrößenwerten und den elektrischen Messwerten minimal wird oder eine vorgegebene Schwelle erreicht oder unterschreitet.

**8.** Verfahren nach Anspruch 7,
**dadurch gekennzeichnet, dass**
beim Variieren der Lastdaten die der jeweiligen Lastgruppe zugeordneten Wichtungswerte berücksichtigt werden, indem diejenigen Lastdaten, deren Wichtungswerte eine kleinere Prognosezuverlässigkeit anzeigen, in einem größeren Bereich variiert werden als Lastdaten, deren Wichtungswert eine größere Prognosezuverlässigkeit anzeigen.

**9.** Einrichtung (200) zum Erzeugen eines Zustandssignals (Sz), das den Zustand einer Energieübertragungsanlage anzeigt, mit

- einer Schnittstelle zur Eingabe elektrischer Messwerte, die für vorgegebene Netzknoten der Energieübertragungsanlage für zumindest eine elektrische Messgröße gemessen werden,

**gekennzeichnet durch**

- eine Steuereinrichtung, die geeignet ist, Lastgruppen zu bilden, den Lastgruppen Lasten zuzuordnen und den Lastgruppe jeweils einen individuellen Wichtungswert zuzuweisen, der die Prognosezuverlässigkeit prognostizierter Lastdaten der der Lastgruppe zugeordneten Lasten beschreibt, und den Zustand der Energieübertragungsanlage unter Heranziehung der Messwerte, der Lastdaten sowie der Wichtungswerte zu überprüfen und ein den Zustand anzeigendes Zustandssignal (Sz) zu erzeugen.

## Claims

**1.** Method for creating a state signal (Sz), which indicates a state of an energy transmission system, wherein,

- electrical measured values for at least one electrical measurement variable are measured for predetermined network nodes of the electricity transmission system and
- by including the measured values, the state signal (Sz) indicating the state is generated, wherein
- the electrical loads connected to the energy transmission system are each assigned predicted load data, which predicts the electrical behaviour of the respective load,

**characterised in that**

- the electrical loads are each assigned to an electrical load group, in which electrical loads with comparable prediction reliability are grouped together,
- each load group is allocated a respective individual weighting value, which describes the prediction reliability of the predicted load data of the loads assigned to the load group, and
- the state signal (Sz) is formed by including the measured values, the load data and also the weighting values.

**2.** Method according to claim 1,
**characterised in that**

- load groups for electrical loads for which at least one measured consumption value of at least one energy consumption measurement device is present in each case and also further load groups for electrical loads for which no measured consumption value is present, are available and
- in the assignment of the electrical loads to one of the load groups the prediction reliability and also the presence of a measured consumption value is taken into consideration.

**3.** Method according to one of the preceding claims,
**characterised in that**
at least one current climate measurement value is measured and the weighting values and/or the load data are corrected by including the current measured climate measurement value.

**4.** Method according to claim 3,
**characterised in that**
a correction is made if the current measured climate measurement value deviates from a predetermined nominal climate value.

**5.** Method according to one of the preceding claims,
**characterised in that**

- simulated measurement variables are calculated by including the electrical measured values, the predicted load data and the weighting values for network nodes of the energy transmission system and
- the state of the energy transmission system is checked by including the simulated measurement variables.

**6.** Method according to claim 5,
**characterised in that**
simulated measurement variables are calculated for the network nodes for which no electrical measured values are present.

**7.** Method according to one of the preceding claims,
**characterised in that**

- simulated measurement variables are calculated for the predetermined network nodes for which electrical measured values are present,
- the simulated measurement variables are compared to the predicted measured values and
- optimised load data is formed, **in that** the predicted load data is varied until the deviation between the simulated measurement variables and the electrical measured values becomes minimal or the value reaches or falls below a predetermined threshold.

**8.** Method according to claim 7,
**characterised in that,**
on variation of the load data the weighting values assigned to the respective load group are taken into account, **in that** load data of which the weighting values indicate a lower prediction reliability is varied in a greater range than load data of which the prediction values indicate a greater prediction reliability.

**9.** Device (200) for generating a state signal (Sz) which indicates the state of an energy transmission system, with

- an interface for input of electrical measured values which are measured for predetermined network nodes of the energy transmission system for at least one electrical measurement variable,

**characterised by**

- a control device which is suitable for forming load groups, assigning loads to the load groups and allocating the respective load group an individual weighting value which describes the prediction reliability of predicted load data of the loads assigned to the load group, and for checking the state of the energy transmission system by including the measured values, the load data and also the weighting values and for creating a state signal (Sz) indicating the state.

## Revendications

**1.** Procédé de production d'un signal (Sz) d'état, qui indique un état d'une installation de transmission d'énergie, dans lequel

- on mesure pour des noeuds de réseau donnés à l'avance de l'installation de transmission d'énergie des valeurs de mesure électriques d'au moins une grandeur de mesure électrique et
- en mettant à profit les valeurs de mesure, on produit le signal (Sz) d'état indiquant l'état, dans lequel
- on affecte aux charges électriques raccordées à l'installation de transmission d'énergie respectivement des données de charge pronostiquées, qui pronostiquent le comportement électrique de la charge respective,

**caractérisé en ce que**

- on affecte les charges électriques respectivement à un groupe de charges électriques dans lequel sont rassemblées des charges électriques ayant des fiabilités de pronostic comparables,
- on affecte à chaque groupe de charges respectivement une valeur individuelle de pondération, qui décrit la fiabilité de pronostic des données de charge pronostiquées des charges affectées au groupe de charges et
- on forme le signal (Sz) d'état en mettant à profit les valeurs de mesure, les données de charge ainsi que les valeurs de pondération.

**2.** Procédé suivant la revendication 1, **caractérisé en ce que**

- sont à disposition des groupes de charges électriques pour lesquelles il y a respectivement au moins une valeur de mesure de consommation d'au moins un dispositif de mesure de consommation d'énergie, ainsi que d'autres groupes de charges électriques pour lesquelles il n'y a pas de valeur de mesure de consommation et
- dans l'affectation des charges électriques à l'un des groupes de charges, on tient compte de la fiabilité du pronostic ainsi que de la présence d'une valeur de mesure de consommation.

**3.** Procédé suivant l'une quelconque des revendications précédentes, **caractérisé en ce qu'**on mesure au moins une valeur de mesure climatique présente et on corrige les valeurs de pondération et/ou les données de charge en tirant profit de la valeur de mesure climatique mesurée présentement.

**4.** Procédé suivant la revendication 3, **caractérisé en ce qu'**on effectue une correction si la valeur de mesure climatique mesurée présentement s'écarte d'une valeur de consigne climatique donnée à l'avance.

**5.** Procédé suivant l'une quelconque des revendications précédentes, **caractérisé en ce que**

- en tirant profit des valeurs de mesure électriques, des données de charge pronostiquées et des valeurs de pondération pour des noeuds de l'installation de transmission d'énergie, on calcule des valeurs de grandeur de mesure simulées et
- on contrôle l'état de l'installation de transmission d'énergie en tirant profit des valeurs de grandeur de mesure simulées.

**6.** Procédé suivant la revendication 5, **caractérisé en ce que** l'on calcule des valeurs de mesure simulées pour des noeuds de réseaux pour lesquels il n'y a pas de valeur de mesure électrique.

**7.** Procédé suivant l'une quelconque des revendications précédentes, caractérisé en ce

- pour les noeuds de réseau donnés à l'avance pour lesquels il y a des valeurs de mesure électriques, on calcule des valeurs de grandeur de mesure simulées
- on compare les valeurs de grandeur de mesure simulées aux valeurs de mesures mesurées et
- on forme des données de charge optimisées en faisant varier les données de charge pronostiquées jusqu'à ce que l'écart entre les valeurs de grandeur de mesure simulées et les valeurs de mesure électriques soit minimum ou jusqu'à ce qu'un seuil donné à l'avance soit atteint ou jusqu'à ce que l'on passe en-dessous de ce seuil.

**8.** Procédé suivant la revendication 7, **caractérisé en ce que**, si les données de charge varient, on prend en compte les valeurs de pondération affectées aux groupes de charges respectifs en faisant varier les données de charge dont les valeurs de pondération ont une fiabilité de pronostic plus petite dans une plage plus grande que des données de charge dont la valeur de pondération a une fiabilité de pronostic plus grande.

**9.** Dispositif (200) de production d'un signal (Sz) d'état, qui indique l'état d'une installation de transmission d'énergie, comprenant

- une interface d'entrée de valeurs de mesure électriques, qui sont mesurées pour au moins une grandeur de mesure électrique pour des noeuds de réseau donnés à l'avance de l'installation de transmission d'énergie,

**caractérisé par**

- un dispositif de commande propre à former des groupes de charges, à associer des charges aux groupes de charges et à affecter aux groupes de charges respectivement une valeur de pondération individuelle, qui décrit la fiabilité de pronostic de données pronostiquées des charges associées aux groupes de charges, et à contrôler l'état de l'installation de transmission d'énergie en tirant profit des valeurs de mesure des données de charges ainsi que des valeurs de pondération et à produire un signal (Sz) d'état indiquant l'état.

FIG 1

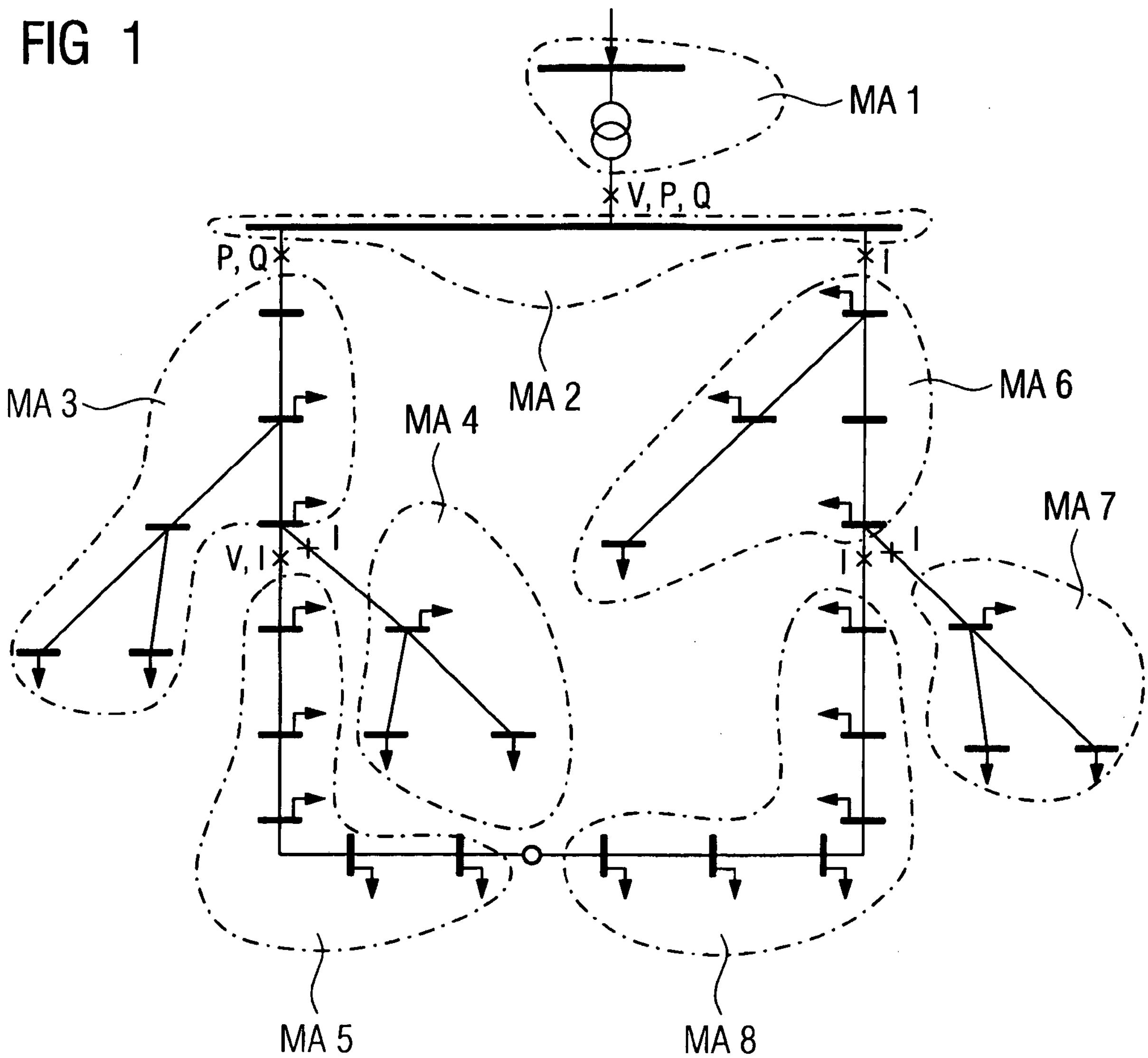

FIG 2

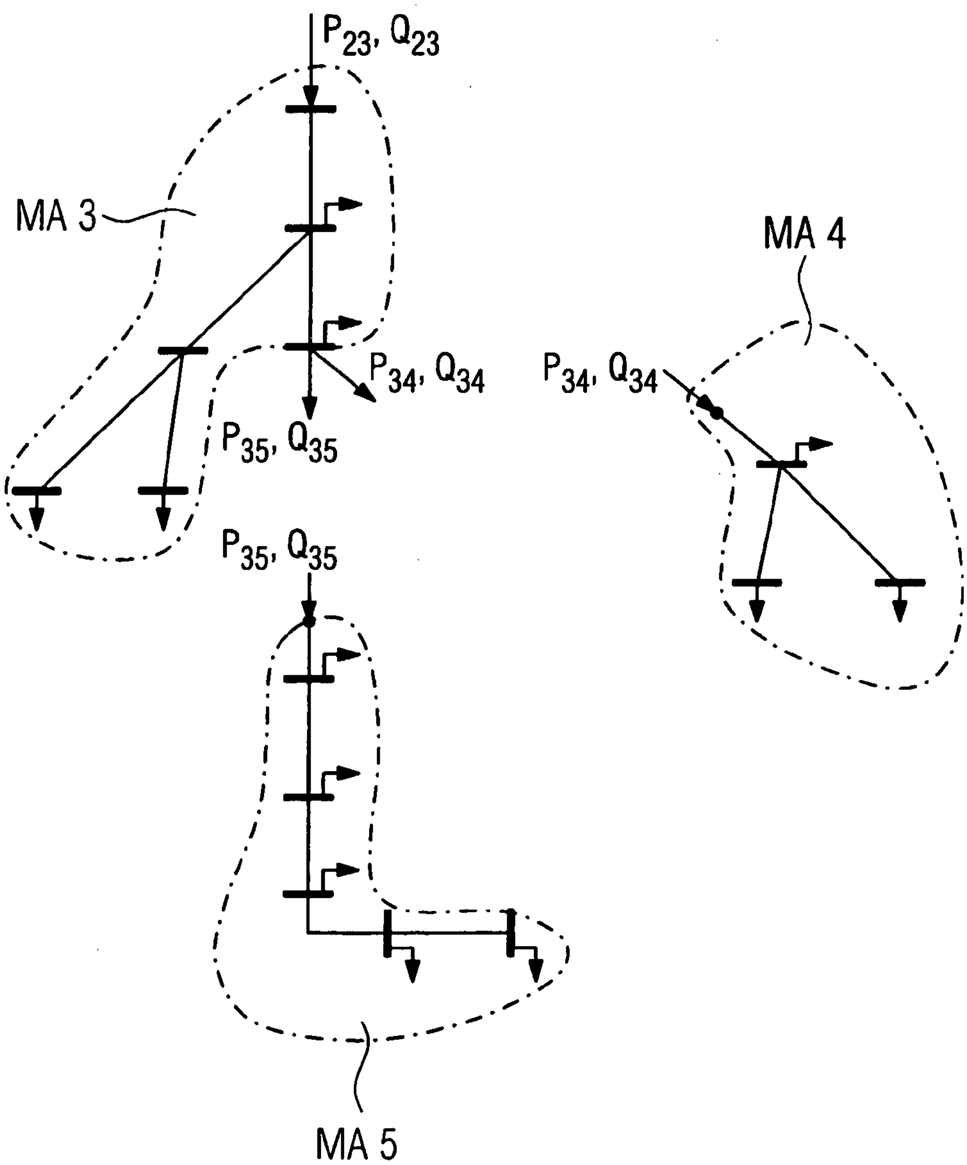

FIG 3

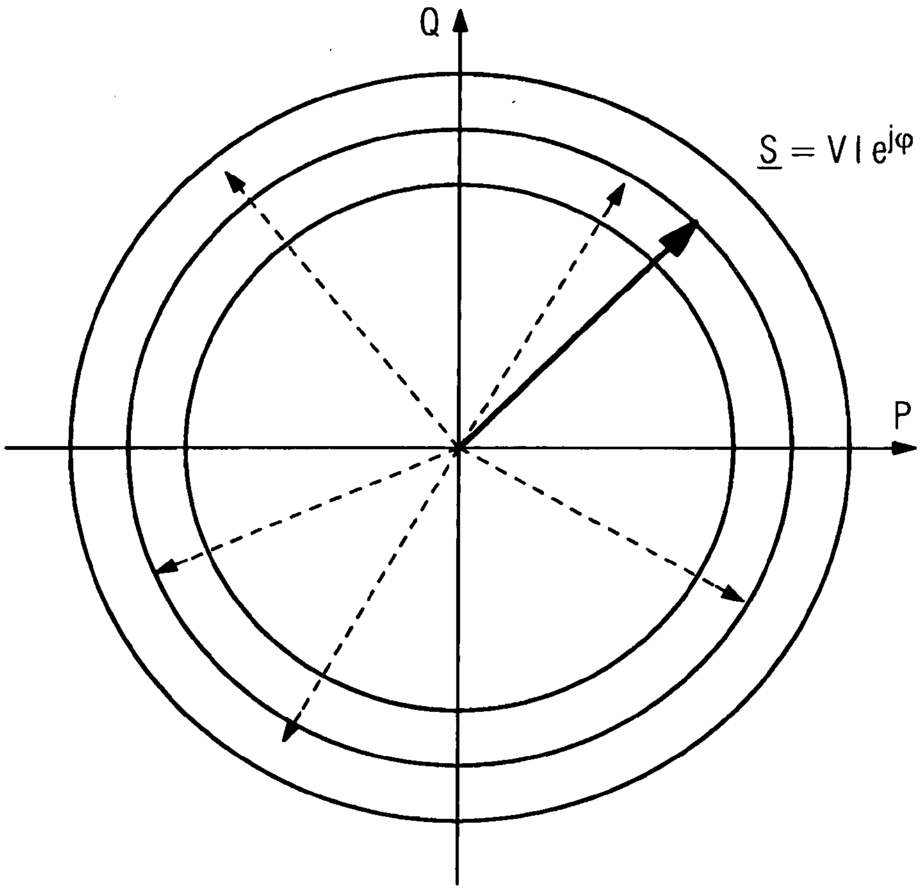

FIG 4

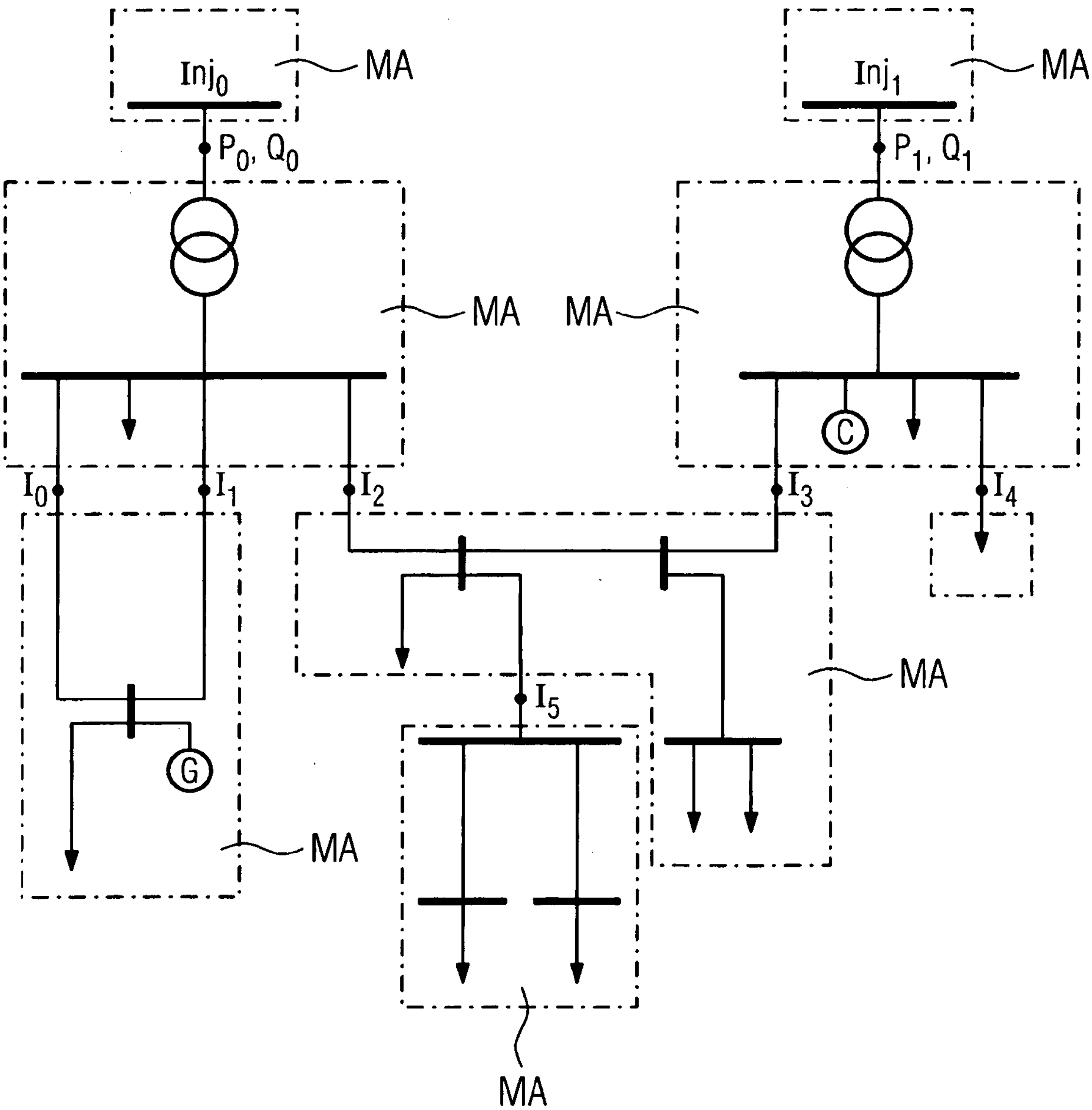

FIG 5

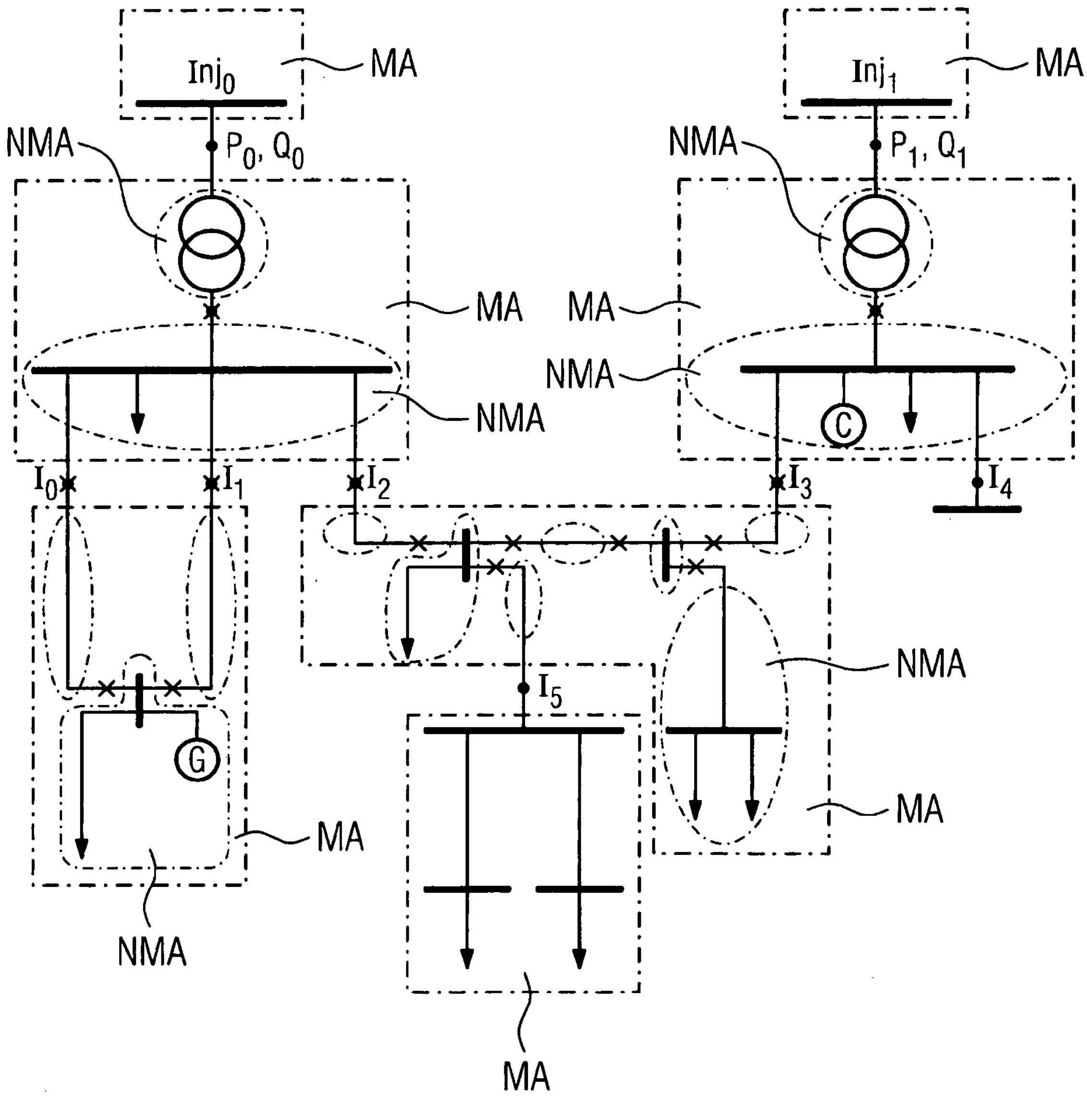
Inj0
MA
P0, Q0
NMA
MA
NMA
Inj1
MA
P1, Q1
NMA
MA
NMA
C
I0
I1
I2
I3
I4
G
MA
NMA
I5
NMA
MA
MA

FIG 6

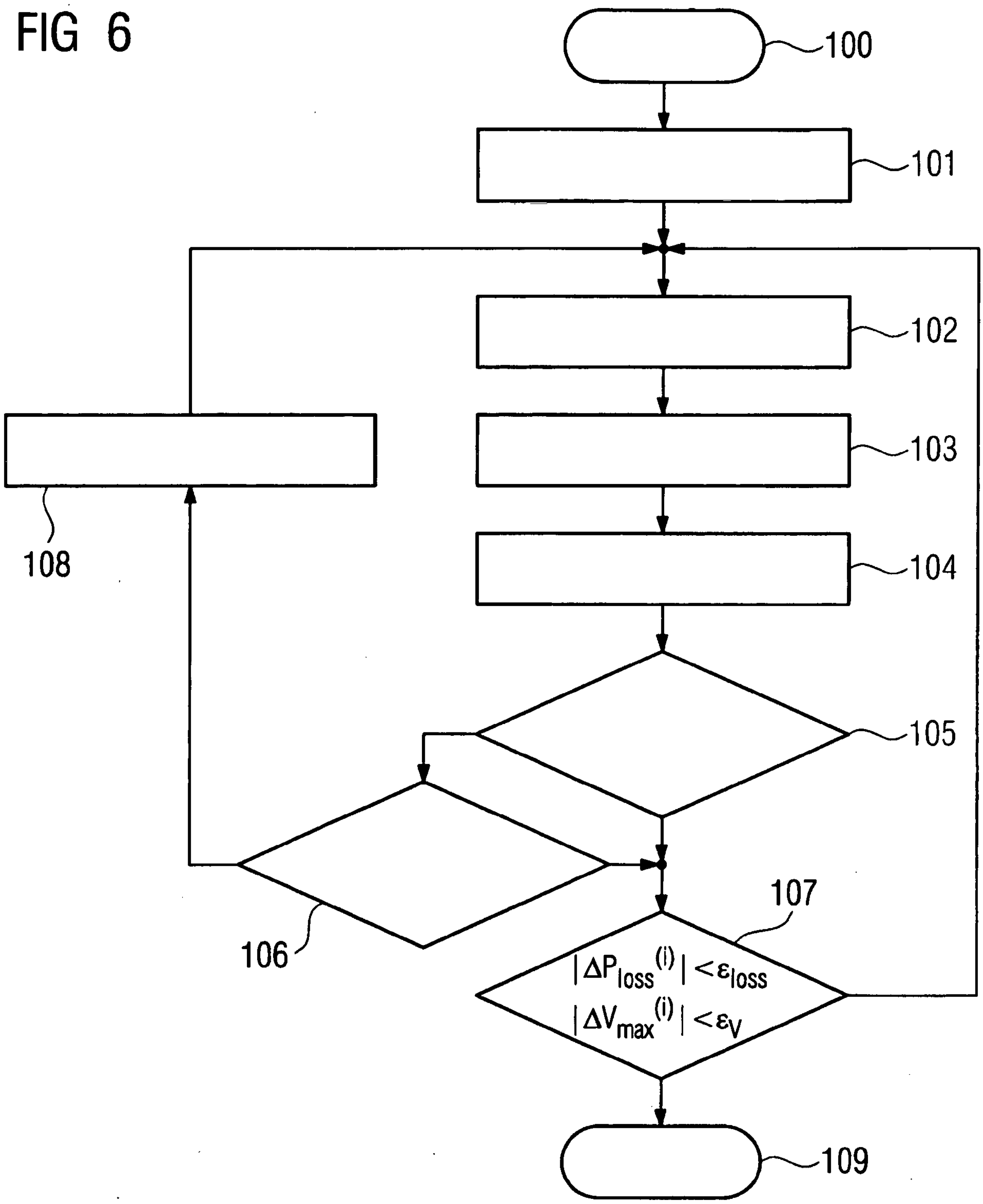
100
101
102
103
104
105
106
107
108
$|\Delta P_{loss}^{(i)}| < \varepsilon_{loss}$
$|\Delta V_{max}^{(i)}| < \varepsilon_V$
109

FIG 7

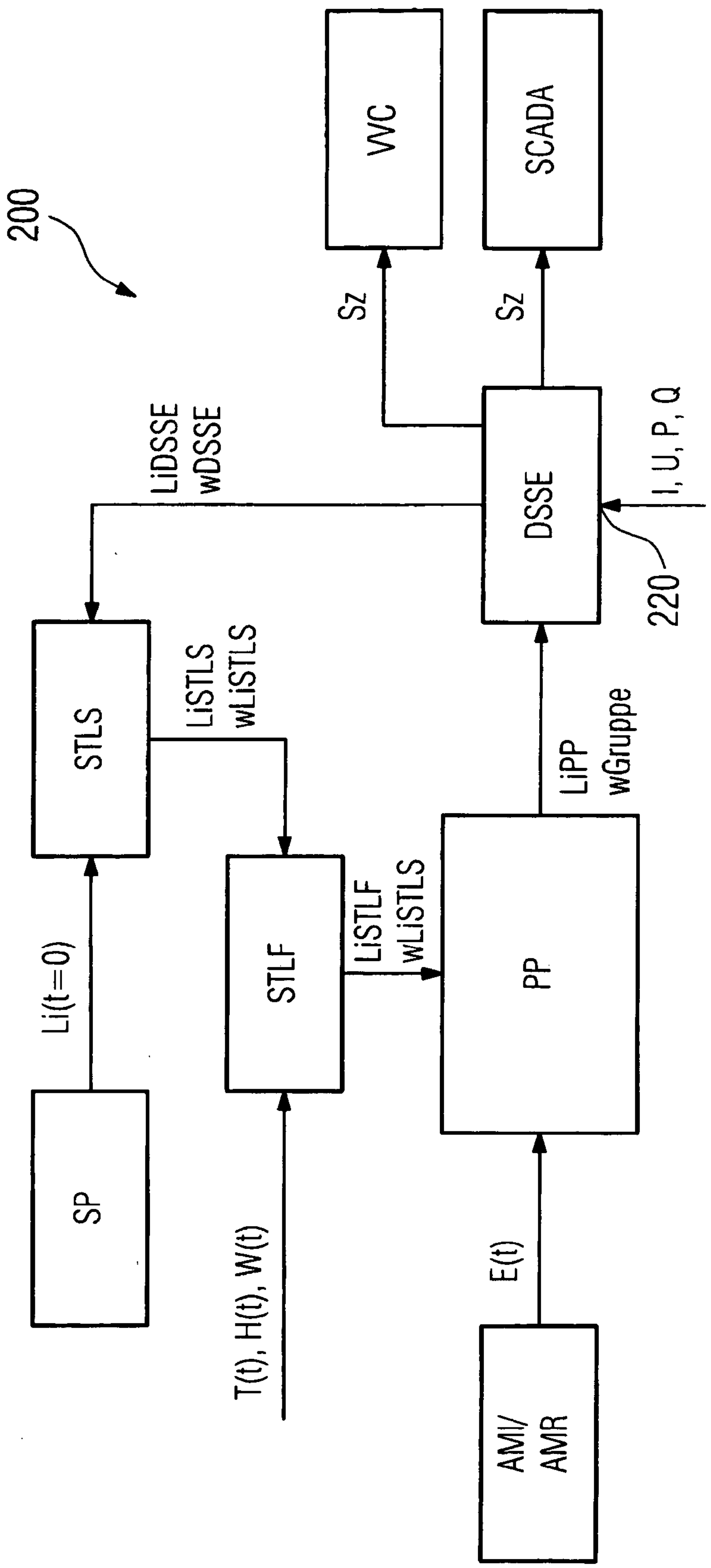
200
VVC
SCADA
Sz
Sz
LiDSSE
wDSSE
DSSE
I, U, P, Q
220
STLS
LiSTLS
wLiSTLS
Li(t=0)
SP
STLF
LiSTLF
wLiSTLS
PP
LiPP
wGruppe
T(t), H(t), W(t)
E(t)
AMI/
AMR

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03025701 A2